# EUROPEAN PATENT APPLICATION

(11) **EP 3 226 625 A1**
(43) Date of publication of application: **04.10.2017**
(21) Application number: 15871682.9
(22) Date of filing: 22.07.2015
(51) Int. Cl.: H04W 52/04, H04W 52/36

(54) **NETWORK SIDE DEVICE, UE AND POWER ADJUSTMENT METHOD**

(30) Priority: 22.12.2014 CN 201410829914
(71) Applicant: Huawei Technologies Co., Ltd., Longgang District Shenzhen, Guangdong 518129 (CN)
(72) Inventor: PAN, Yongchao, Shenzhen Guangdong 518129 (CN); WEN, Wei, Shenzhen Guangdong 518129 (CN); ZHENG, Lei, Shenzhen Guangdong 518129 (CN); LU, Xiaohong, Shenzhen Guangdong 518129 (CN)
(74) Representative: Goddar, Heinz J.
(86) International application number: PCT/CN2015/084791
(87) International publication number: WO 2016/101608

(57) **Abstract**

Embodiments of the present invention disclose a network side device, to reduce costs. The network side device includes: a processor, configured to: obtain a first transmit power value of a control channel and a second transmit power value of a data channel of user equipment UE, and when a sum of the first transmit power value and the second transmit power value is a maximum transmit power value of the UE, and the first transmit power value falls outside a preset power range or a ratio of the first transmit power value to the maximum transmit power value falls outside a preset ratio range, generate a first control message, where the preset power range is a product of the maximum transmit power value and the preset ratio range, the first control message is used to instruct the UE to decrease the transmit power value of the control channel, and the decreased transmit power value of the control channel falls within the preset power range or a ratio of the decreased transmit power value to the maximum transmit power value falls within the preset ratio range; and a transmitter, configured to send the first control message to the UE. The embodiments of the present invention further provide UE and a power adjustment method.

## Description

This application claims priority to Chinese Patent Application 201410829914.9, filed with the Chinese Patent Office on December 22, 2014 and entitled "NETWORK SIDE DEVICE, UE, AND POWER ADJUSTMENT METHOD", which is incorporated herein by reference in its entirety.

### TECHNICAL FIELD

The present invention relates to the field of communications technologies, and in particular, to a network side device, UE, and a power adjustment method.

### BACKGROUND

In a Wideband Code Division Multiple Access (Wideband Code Division Multiple Access, WCDMA) system, power control is an important means of maintaining system performance. A transmit power of user equipment (User Equipment, UE) usually needs to be controlled, to avoid blocking of an entire cell caused by an excessively high transmit power. A transmit power of the UE includes a transmit power of a data channel that is used to transmit user plane data and a transmit power of a control channel that is used to help the data channel to perform demodulation (detect whether data exists) and maintain synchronization with a network side. Therefore, when the transmit power of the UE is controlled, the control may be specifically implemented by adjusting the foregoing two powers. It is found that when a total transmit power of the UE is limited, an increase of the transmit power of the control channel causes the transmit power of the data channel to decrease. Consequently, coverage performance of the UE is deteriorated.

### SUMMARY

Embodiments of the present invention provide a network side device, UE, and a power adjustment method, to reduce costs while ensuring coverage performance of UE.

A first aspect of the embodiments of the present invention provides a network side device, including:
a processor, configured to: obtain a first transmit power value of a control channel and a second transmit power value of a data channel of user equipment UE, and when a sum of the first transmit power value and the second transmit power value is a maximum transmit power value of the UE, and the first transmit power value falls outside a preset power range or a ratio of the first transmit power value to the maximum transmit power value falls outside a preset ratio range, generate a first control message, where the preset power range is a product of the maximum transmit power value and the preset ratio range, the first control message is used to instruct the UE to decrease the transmit power value of the control channel, and the decreased transmit power value of the control channel falls within the preset power range or a ratio of the decreased transmit power value to the maximum transmit power value falls within the preset ratio range; and
a transmitter, configured to send the first control message to the UE.

With reference to the first aspect of the embodiments of the present invention, in a first implementation manner of the first aspect of the embodiments of the present invention, the processor is further configured to: obtain a block error rate BLEER value from a service request message sent by the UE, and generate a second control message according to the BLEER value when the sum of the first transmit power and the second transmit power is less than the maximum transmit power; and
the transmitter is further configured to send the second control message to the UE, so that the UE adjusts the first transmit power value according to the second control message, and adjusts the second transmit power value according to a preset correspondence between the first transmit power value and the second transmit power value.

With reference to the first aspect of the embodiments of the present invention, in a second implementation manner of the first aspect of the embodiments of the present invention, the processor is further configured to determine the ratio range before generating the first control message.

With reference to the second implementation manner of the first aspect of the embodiments of the present invention, in a third implementation manner of the first aspect of the embodiments of the present invention, the processor is specifically configured to: determine a third transmit power value and a fourth transmit power value of the control channel, determine a first ratio of the third transmit power value to the maximum transmit power value and a second ratio of the fourth transmit power value to the maximum transmit power value, and determine the ratio range according to the first ratio and the second ratio, where the third transmit power value is a power value, which exists when out-of-synchronization occurs on the control channel, of the control channel, and the fourth transmit power value is a difference between the maximum transmit power value and a power value, which exists when demodulation cannot be performed, of the data channel.

With reference to the first aspect of the embodiments of the present invention, in a third implementation manner of the first aspect of the embodiments of the present invention, the network side device further includes a receiver, the receiver is configured to receive a notification message sent by the UE, and the notification message includes the first transmit power value and the second transmit power value; and
the processor obtains the first transmit power value and the second transmit power value from the receiver.

A second aspect of the embodiments of the present invention provides UE, including:
a receiver, configured to receive a first control message sent by a network side device, where the first control message is a message sent by the network side device when the network side device determines that a sum of a first transmit power value of a control channel and a second transmit power value of a data channel is a maximum transmit power value of the UE, and the first transmit power value falls outside a preset power range or a ratio of the first transmit power value to the maximum transmit power value falls outside a preset ratio range, where the preset power range is a product of the maximum transmit power value and the preset ratio range; and
a processor, configured to decrease the first transmit power value according to the first control message received by the receiver, so that the decreased first transmit power value falls within the preset power range or a ratio of the decreased first transmit power value to the maximum transmit power value falls within the preset ratio range.

With reference to the second aspect of the embodiments of the present invention, in a first implementation manner of the second aspect of the embodiments of the present invention, the receiver is further configured to: when the network side device determines that a sum of the first transmit power value and the second transmit power value is less than the maximum transmit power value, receive a second control message sent by the network side device according to a block error rate BLER value, where the BLER value is a value that is obtained by the network side device from a service request message sent by the UE and that is used to indicate data transmission quality; and
the processor is further configured to: adjust the first transmit power value according to the second control message received by the receiver, and adjust the second transmit power value according to a preset correspondence between the first transmit power value and the second transmit power value.

With reference to the second aspect of the embodiments of the present invention, in a second implementation manner of the second aspect of the embodiments of the present invention, the UE further includes a transmitter, where the transmitter configured to send a notification message to the network side device, where the notification message includes the first transmit power value and the second transmit power value.

A third aspect of the embodiments of the present invention provides a power adjustment method, including:
obtaining, by a network side device, a first transmit power value of a control channel and a second transmit power value of a data channel of user equipment UE;
when a sum of the first transmit power value and the second transmit power value is a maximum transmit power value of the UE, and the first transmit power value falls outside a preset power range or a ratio of the first transmit power value to the maximum transmit power value falls outside a preset ratio range, generating, by the network side device, a first control message, where the preset power range is a product of the maximum transmit power value and the preset ratio range, the first control message is used to instruct the UE to decrease the transmit power of the control channel, and the decreased transmit power value of the control channel falls within the preset power range or a ratio of the decreased transmit power value to the maximum transmit power value falls within the preset ratio range; and
sending, by the network side device, the first control message to the UE.

With reference to the third aspect of the embodiments of the present invention, in a first implementation manner of the third aspect of the embodiments of the present invention, the method further includes:
obtaining, by the network side device, a block error rate BLEER value from a service request message sent by the UE, and generating a second control message according to the BLEER value when the sum of the first transmit power and the second transmit power is less than the maximum transmit power; and
sending, by the network side device, the second control message to the UE, so that the UE adjusts the first transmit power value according to the second control message, and adjusts the second transmit power value according to a preset correspondence between the first transmit power value and the second transmit power value.

With reference to the third aspect of the embodiments of the present invention, in a second implementation manner of the third aspect of the embodiments of the present invention, before the generating a first control message, the method further includes: determining, by the network side device, the ratio range.

With reference to the second implementation manner of the third aspect of the embodiments of the present invention, in a third implementation manner of the third aspect of the embodiments of the present invention, the determining, by the network side device, the ratio range includes:
determining, by the network side device, a third transmit power value and a fourth transmit power value of the control channel, where the third transmit power value is a power value, which exists when out-of-synchronization occurs on the control channel, of the control channel, and the fourth transmit power value is a difference between the maximum transmit power value and a power value, which exists when demodulation cannot be performed, of the data channel;
determining, by the network side device, a first ratio of the third transmit power value to the maximum transmit power value and a second ratio of the fourth transmit power value to the maximum transmit power value; and
determining, by the network side device, the ratio range according to the first ratio and the second ratio.

With reference to the third aspect of the embodiments of the present invention, in a fourth implementation manner of the third aspect of the embodiments of the present invention, before the obtaining, by a network side device, a first transmit power value of a control channel and a second transmit power value of a data channel of user equipment UE, the method further includes:
receiving, by the network side device, a notification message sent by the UE, where the notification message includes the first transmit power value and the second transmit power value; and
obtaining, by the network side device, the first transmit power value and the second transmit power value from the notification message.

A fourth aspect of the embodiments of the present invention provides a power adjustment method, including:
receiving, by UE, a first control message sent by a network side device, where the first control message is a message sent by the network side device when the network side device determines that a sum of a first transmit power value of a control channel and a second transmit power value of a data channel is a maximum transmit power value of the UE, and the first transmit power value falls outside a preset power range or a ratio of the first transmit power value to the maximum transmit power value falls outside a preset ratio range, where the preset power range is a product of the maximum transmit power value and the preset ratio range; and
decreasing, by the UE, the first transmit power value according to the first control message received by the receiver, so that the decreased first transmit power value falls within the preset power range or a ratio of the decreased first transmit power value to the maximum transmit power value falls within the preset ratio range.

With reference to the fourth aspect of the embodiments of the present invention, in a first implementation manner of the fourth aspect of the embodiments of the present invention, the method further includes:
when the network side device determines that the sum of the first transmit power value and the second transmit power value is less than the maximum transmit power value, receiving, by the UE, a second control message sent by the network side device according to a block error rate BLER value, where the BLER value is a value that is obtained by the network side device from a service request message sent by the UE and that is used to indicate data transmission quality; and
adjusting, by the UE, the first transmit power value according to the second control message received by the receiver, and adjusting the second transmit power value according to a preset correspondence between the first transmit power value and the second transmit power value.

With reference to the fourth aspect of the embodiments of the present invention, in a second implementation manner of the fourth aspect of the embodiments of the present invention, before the network side device determines that the sum of the first transmit power value and the second transmit power value is less than the maximum transmit power value, the further includes:
sending, by the UE, a notification message to the network side device, where the notification message includes the first transmit power value and the second transmit power value.

It can be seen from the foregoing technical solutions that the embodiments of the present invention have the following technical effects:
UE sends a notification message to a network side device. When the network side device identifies, from the notification message, that the UE reaches a maximum transmit power value, and determines that a transmit power value of a control channel falls outside an optimal ratio range of the maximum transmit power value of the UE, the network side device sends, to the UE, a control message used to adjust the transmit power value of the control channel and a transmit power value of the data channel. Compared with the prior art, a function of the UE does not need to be upgraded, and the UE may adjust the transmit power value of the control channel and the transmit power value of the data channel according to the control message, so as to ensure coverage performance of the UE when the UE reaches the maximum transmit power, thereby reducing costs generated due to function upgrade of the UE in the prior art.

### BRIEF DESCRIPTION OF DRAWINGS

FIG. 1 is a schematic diagram of an embodiment of a network side device according to an embodiment of the present invention;
FIG. 2 is a schematic diagram of another embodiment of a network side device according to an embodiment of the present invention;
FIG. 3 is a schematic diagram of an embodiment of UE according to an embodiment of the present invention;
FIG. 4 is a schematic diagram of an embodiment of a power adjustment method according to an embodiment of the present invention;

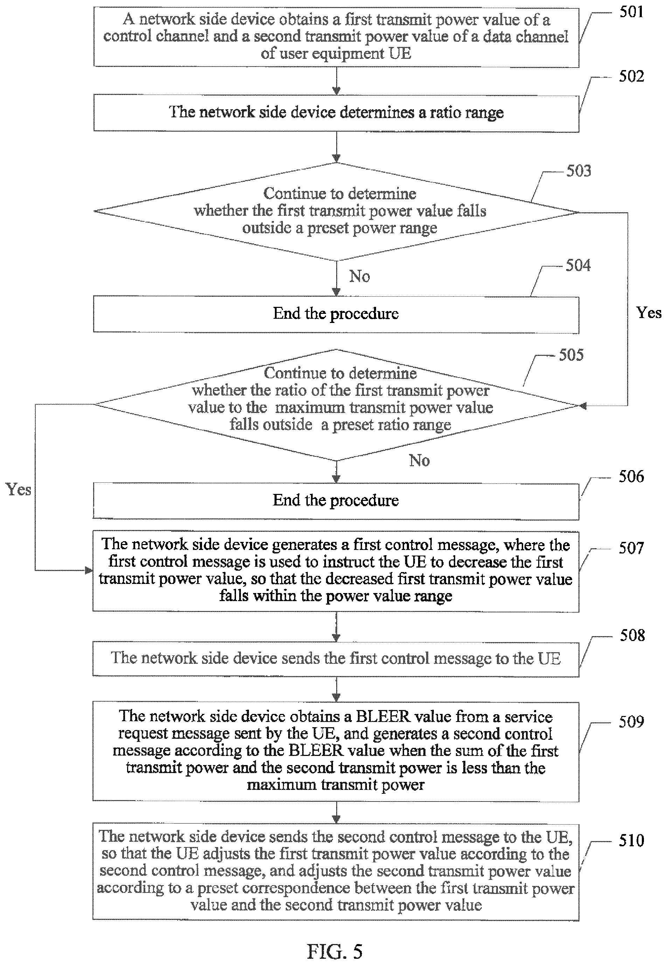

FIG. 5 is a schematic diagram of another embodiment of a power adjustment method according to an embodiment of the present invention; and
FIG. 6 is a schematic diagram of another embodiment of a power adjustment method according to an embodiment of the present invention.

### DESCRIPTION OF EMBODIMENTS

Embodiments of the present invention provide a network side device, UE, and a power adjustment method, to adjust a transmit power value of a control channel and a transmit power value of a data channel when a transmit power value of UE is limited, so as to ensure coverage performance of the UE.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

The technologies described in the embodiments of the present invention may be applied to various communications systems, for example, a 2G communications system such as Global System for Mobile Communications (GSM, Global System for Mobile Communication), a 3G communications system such as Wideband Code Division Multiple Access (WCDMA, wideband code division multiple access) and Time Division-Synchronous Code Division Multiple Access (TD-SCDMA, time division-synchronization code division multiple access), a Long Term Evolution (LTE, Long-Term Evolution) communications system, and a next generation communications system such as a subsequent evolved system of the Long Term Evolution communications system.

User equipment (user equipment, UE) in the embodiments of the present invention may be a mobile terminal, for example, a mobile phone or a tablet computer, or may be a fixed terminal device, for example, a personal computer. Specific implementation of UE is not limited in the embodiments of the present invention.

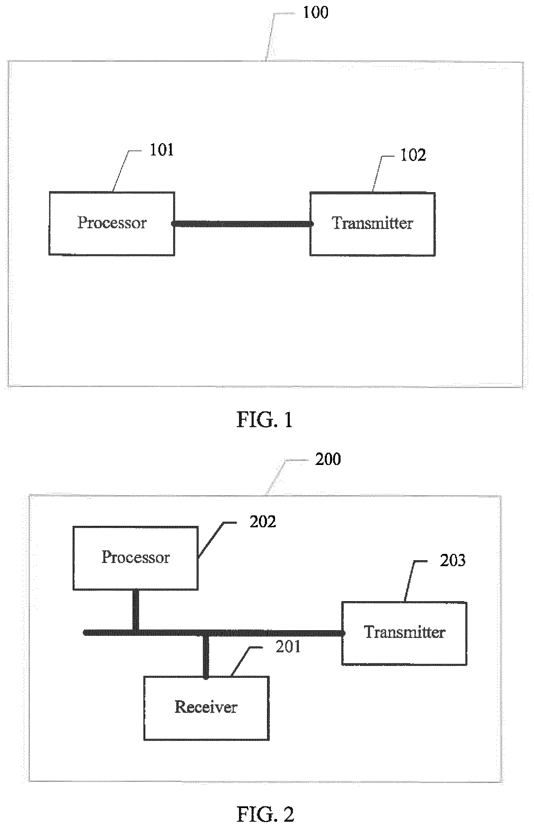

A network side device in the embodiments of the present invention may be a base station. The base station may be a base transceiver station (BTS, base transceiver station) in a GSM system or a CDMA system, or a NodeB (NodeB) in a WCDMA system, or an e-NodeB (e-NodeB, evolved NodeB) in an LTE system or a similar device in a subsequent evolved communications system of LTE. Specific implementation of a network side device is not limited in the embodiments of the present invention. Referring to FIG. 1, an embodiment of a network side device 100 according to an embodiment of the present invention includes: a processor 101 and a transmitter 102.

The processor 101 is configured to: obtain a first transmit power value of a control channel and a second transmit power value of a data channel of user equipment UE, and when a sum of the first transmit power value and the second transmit power value is a maximum transmit power value of the UE, and the first transmit power value falls outside a preset power range or a ratio of the first transmit power value to the maximum transmit power value falls outside a preset ratio range, generate a first control message, where the preset power range is a product of the maximum transmit power value and the preset ratio range, the first control message is used to instruct the UE to decrease the transmit power value of the control channel, and the decreased transmit power value of the control channel falls within the preset power range or a ratio of the decreased transmit power value to the maximum transmit power value falls within the preset ratio range.

It may be understood that the network side device may calculate the received first transmit power value and the received second transmit power by using the processor 101. When a calculation result is the maximum transmit power value of the UE, the processor 101 may adjust the first transmit power value by using the preset ratio range. The following two manners may be specifically included:
First manner: The processor 101 multiplies the maximum transmit power value by the preset ratio range to obtain a power value range, and then compares the first transmit power value with the power value range, so as to determine whether the first transmit power value falls within the power value range. If the first transmit power value falls within the power value range, the procedure is ended; or if the first transmit power value falls outside the power value range, the network side device generates the first control message by using the processor 101. The first control message is used to instruct the UE to decrease the first transmit power value, so that the decreased first transmit power value falls within the power value range.
Second manner: The processor 101 may calculate the ratio range of the ratio of the first transmit power value to the maximum transmit power value, and then compare the calculated ratio with the preset ratio range, so as to determine whether the calculated ratio falls within the preset ratio range. If the calculated ratio falls within the preset ratio range , the procedure is ended; or if the calculated ratio falls outside the preset ratio range, the processor 101 generates the first control message, where the first control message is used to instruct the UE to decrease the first transmit power value, so that a ratio of the decreased first transmit power value to the maximum transmit power value falls within the preset ratio range.

It should be noted that if the decreased first transmit power value falls within a range of the product of the maximum transmit power value and the preset ratio range or the ratio of the first transmit power value to the maximum transmit power value falls within the preset ratio range, it may be avoided that because a transmit power value of the control channel is excessively low, the control channel is out of synchronization and consequently coverage performance of the UE is affected.

It should be noted that in this embodiment of the present invention, the decreased first transmit power value falls within the preset power range or the ratio of the first transmit power value to the maximum transmit power value falls within the preset ratio range, so as to control adjustment of the first transmit power value, and ensure the coverage performance of the UE. In an actual application, the decreased first transmit power value may be within the preset range, or a ratio of the increased second transmit power value to the maximum transmit power value falls within the preset ratio range. This is not specifically limited herein.

It may be understood that the UE decreases the first transmit power value according to the received first control message. When a transmit power of the UE is maintained to be a maximum value, the second transmit power value may be increased, so as to improve the coverage performance of the UE.

It should be noted that the preset ratio range may be preset on the network side device, or may be generated by the network side device in advance according to a control policy. This is not specifically limited herein.

The transmitter 102 is configured to send the first control message to the UE.

Optionally, the processor 101 is further configured to analyze a received notification message to obtain a BLER value of the UE. When determining that the sum of the transmit power value of the control channel and the transmit power value of the data channel is less than the maximum transmit power value, the processor 101 generates a second control message.

It may be understood that the processor 101 of the network side device may obtain the block error rate (Block Error Rate, BLER) value from a service request message sent by the UE, where the BLER value is used to indicate data transmission quality, and the transmit power value of the data channel may affect the BLER value, that is, adjustment of the transmit power of the UE may be implemented by using the BLER value.

It should be noted that a directly-proportional correspondence between the first transmit power value and the second transmit power value is preset on the UE. When the processor 101 of the network side device determines that the sum of the first transmit power value and the second transmit power value is less than the maximum transmit power value, the processor 101 may control the transmit power value of the UE by adjusting the first transmit power value. Specifically, the processor 101 may generate, according to the obtained BLER value, the second control message used to adjust the first transmit power value of the UE.

The transmitter 102 is further configured to send the second control message to the UE, so that the UE adjusts the first transmit power value according to the second control message, and adjusts the second transmit power value according to the preset correspondence between the first transmit power value and the second transmit power value.

It may be understood that when the BLER value obtained by the processor 101 is low, the processor 101 generates the second control message used to decrease the first transmit power value, and then the UE is enabled to decrease the second transmit power value according to the second control message and the preset directly-proportional relationship, thereby decreasing the transmit power value of the UE. When the BLER obtained by the processor 101 is high, the processor 101 generates the second control message used to increase the first transmit power value, and then the UE is enabled to increase the second transmit power value according to the second control message and the preset directly-proportional relationship, thereby increasing the transmit power of the UE.

In addition, in this embodiment of the present invention, when the transmit power of the UE reaches a maximum value, the processor 101 of the network side device generates the first control message by using the preset ratio range, so that the UE decreases the transmit power of the control channel to achieve an objective of ensuring the coverage performance of the UE. In an actual application, a function of the UE may be upgraded, so that the UE may obtain, according to a protocol of Release 8 of the Third Generation Partnership Project (3rd Generation Partnership Project, 3GPP), an optimal power ratio that is of the transmit power value of the control channel to the maximum transmit power value and that is provided by the network side device, thereby implementing adjustment of the transmit power value of the data channel and the transmit power value of the control channel, so as to ensure the coverage performance of the UE when the transmit power of the UE is limited.

In this embodiment of the present invention, the network side device receives, by using a receiver, the notification message sent by the UE. When the network side device determines that the transmit power of the UE is limited, the network side device generates the first control message by using the processor, and instructs, by using the first control message, the UE to decrease the transmit power value of the control channel, so that the transmit power of the data channel can be increased, so as to ensure the coverage performance of the UE while lowering a requirement on the function of the UE.

In the foregoing embodiment, the processor of the network side device determines whether the ratio of the transmit power value of the control channel to the maximum transmit power value falls within the preset ratio range. In an actual application, before performing determining, the processor may determine the ratio range. That the processor determines the ratio range is described below. Referring to FIG. 2, another embodiment of a network side device 200 according to an embodiment of the present invention includes: a receiver 201, a processor 202, and a transmitter 203.

The receiver 201 is configured to receive a notification message sent by UE, where the notification message includes a first transmit power value of a control channel and a second transmit power value of a data channel.

It should be noted that the network side device periodically or non-periodically receives, by using the receiver 201, the notification message sent by the user equipment UE by using a transmitter. The notification message carries transmit power values of the UE. The transmit power values of the UE include the transmit power value of the control channel and the transmit power value of the data channel.

Optionally, after the notification message sent by the UE is received, the processor 202 is further configured to determine a ratio range of a ratio of the transmit power value of the control channel to the maximum transmit power value.

It may be understood that when the UE moves at a remote end of the network side device, the transmit power value of the UE increases until the transmit power of the UE reaches an upper limit. The processor 202 of the network side device determines that the transmit power value of the UE in this case is the maximum transmit power value, determines a first ratio of a power value, which exists when out-of-synchronization occurs on the control channel, of the control channel to the maximum transmit power value and a difference between the maximum transmit power value and a power value, which exists when demodulation cannot be performed, of the data channel, then determines a second ratio of the difference to the maximum transmit power value, and respectively uses the first ratio and the second ratio as two endpoint values of the ratio range to determine the ratio range. For example, the processor 202 determines that the maximum transmit power of the UE is 100, the power value, which exists when out-of-synchronization occurs on the control channel, of the control channel is 40, and the power value, which exists when demodulation cannot be performed, of the data channel is 20. That is, when out-of-synchronization occurs on the control channel, the transmit power of the data channel is 60. When demodulation of the data channel is satisfied, the transmit power value of the control channel is 80. As can be known, a range of a ratio of the transmit power value of the control channel to the maximum transmit power value is 60% to 80%.

With a decrease of the transmit power value of the control channel of the UE, it is more probable that out-of-synchronization occurs on the control channel. When the transmit power value of the control channel decreases to a particular value, out-of-synchronization occurs on the control channel. In this case, the network side device records the transmit power value of the control channel as the power value, which exists when out-of-synchronization occurs on the control channel, of the control channel. With a decrease of the transmit power value of the data channel of the UE, it is more probable that the network side device cannot correctly demodulate a packet in a service request message sent by the UE. When the transmit power value of the data channel decreases to a particular value, the network side device cannot demodulate the service request message sent by the UE. In this case, the network side device records the transmit power value of the data channel as the power value, which exists when demodulation cannot be performed, of the data channel.

The processor 202 is configured to: obtain the first transmit power value of the control channel and the second transmit power value of the data channel of the user equipment UE, and when a sum of the first transmit power value and the second transmit power value is the maximum transmit power value of the UE, and the first transmit power value falls outside a preset power range or a ratio of the first transmit power value to the maximum transmit power value falls outside a preset ratio range, generate a first control message, where the preset power range is a product of the maximum transmit power value and the preset ratio range, the first control message is used to instruct the UE to decrease the transmit power value of the control channel, and the decreased transmit power value of the control channel falls within the preset power range or a ratio of the decreased transmit power value to the maximum transmit power value falls within the preset ratio range.

When the UE moves at a remote end of the network side device, to prevent deterioration of coverage performance of the UE that is caused because demodulation cannot be correctly performed on the data channel and out-of-synchronization occurs on the control channel, the second transmit power value and the first transmit power value of the UE need to be increased, so as to increase the transmit power value of the UE. However, when the network side device identifies that the first transmit power value and the second transmit power value of the UE reach the maximum transmit power value of the UE, the first transmit power value and the second transmit power value cannot be increased anymore. In this case, the processor 202 of the network side device may adjust the first transmit power value according to the preset ratio range. At least two following implementation manners are included:
First manner: The processor 101 multiplies the maximum transmit power value by the preset ratio range to obtain a power value range, and then compares the first transmit power value with the power value range, so as to determine whether the first transmit power value falls within the power value range. If the first transmit power value falls within the power value range, the procedure is ended; or if the first transmit power value falls outside the power value range, the network side device generates the first control message by using the processor 101. The first control message is used to instruct the UE to decrease the first transmit power value, so that the decreased first transmit power value falls within the power value range. For example, it is configured on the network side device that the maximum transmit power value of the UE is 100, and a range of the ratio of the first transmit power value of the UE to the maximum transmit power value is 50% to 60%. The product of the maximum transmit power value 100 and the ratio range 50% to 60 is calculated, and it is obtained that the power value range is 50 to 60. When the network side device obtains that the first transmit power reported by the UE is 70 and the second transmit power reported by the UE is 30, the network side device first determines that the sum of the first transmit power value and the second transmit power value is equal to the maximum transmit power value, and determines that the first transmit power value 70 is greater than the maximum value 60 of the power value range, and exceeds the range. Therefore, the processor 202 of the network side device generates the first control message used to instruct the UE to decrease the first transmit power, so that the UE decreases the first transmit power value and increases the second transmit power. For example, the UE decreases the first transmit power from 70 to 55, so that the first transmit power value falls within the range 50 to 60 of the product of the preset ratio range and the maximum transmit power value; and simultaneously increases the second transmit power from 30 to 45, so that the sum of the first transmit power value and the second transmit power value is still 100.
Second manner: The processor 101 may calculate the ratio of the first transmit power value to the maximum transmit power value, and then compare the calculated ratio with the preset ratio range, so as to determine whether the calculated ratio falls within the preset ratio range. If yes, the procedure is ended; or if not, the processor 101 generates the first control message, where the first control message is used to instruct the UE to decrease the first transmit power value, so that a ratio of the decreased first transmit power value to the maximum transmit power value falls within the preset ratio range. For example, it is configured on the network side device that the maximum transmit power value of the UE is 100, and a range of the ratio of the first transmit power value of the UE to the maximum transmit power value is 50% to 60%. When the network side device obtains that the first transmit power reported by the UE is 70 and the second transmit power reported by the UE is 30, the network side device first determines that the sum of the first transmit power value and the second transmit power value is equal to the maximum transmit power value, performs calculation to obtain that the ratio of the first transmit power value 70 to the maximum transmit power value 100 is 70%, compares the calculated ratio 70% with the preset ratio range 50% to 60%, and may learn that the calculated ratio exceeds the preset ratio range. Therefore, the processor 202 of the network side device generates the first control message used to instruct the UE to decrease the first transmit power, so that the UE decreases the first transmit power value and increases the second transmit power. For example, the UE decreases the first transmit power from 70 to 55, so that the first transmit power value occupies 55% of the total transmit power, and falls within the range; and simultaneously increases the second transmit power from 30 to 45, so that the sum of the first transmit power value and the second transmit power value is still 100.

The transmitter 203 is configured to send the first control message to the UE.

In this embodiment of the present invention, the network side device receives, by using the receiver, a notification message sent by the UE. When determining that a transmit power of the UE is limited, before determining whether a ratio of a transmit power value of the control channel to a maximum transmit power value falls within a preset ratio rang, the network side device is further configured to determine a ratio range of a ratio of the transmit power value of the control channel to the maximum transmit power value, so that the processor may generate a first control message according to the ratio range, and instruct, by using the first control message, the UE to adjust the transmit power value of the control channel and a transmit power value of the data channel. Therefore, coverage performance of the UE may be ensured without upgrading a function of the UE, thereby reducing costs. In addition, the network side device determines the ratio range by using a power value, which exists when out-of-synchronization occurs on the control channel, of the control channel and a power value, which exists when demodulation cannot be performed, of the data channel, to ensure an optimal transmit power value of the control channel and an optimal transmit power value of the data channel, so as to improve coverage performance of the UE.

In the foregoing embodiments, the network side device is described. The UE in the embodiments of the present invention is described below.

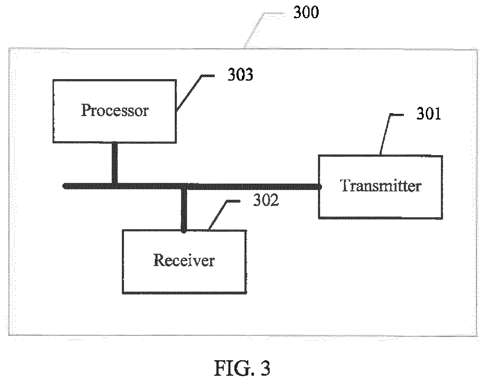

Referring to FIG. 3, an embodiment of user equipment UE 300 according to an embodiment of the present invention includes a receiver 302 and a processor 303. Optionally, the UE 300 further includes a transmitter 301.

The transmitter 301 is configured to send a notification message to a network side device, where the notification message includes a first transmit power value of a control channel and a second transmit power value of a data channel.

It may be understood that a transmit power of the user equipment UE affects coverage performance. Therefore, the UE needs to properly control the transmit power. For example, increasing a transmit power of the data channel may improve the coverage performance of the UE, and reducing a transmit power of the control channel may cause out-of-synchronization of the control channel, and reduce the coverage performance of the UE. To control the transmit power of the UE, the notification message may be sent to the network side device by using the transmitter 301 of the UE, so as to periodically or non-periodically report transmit power values of the UE to the network side device. The transmit power values of the UE include the transmit power value of the control channel and the transmit power value of the data channel.

The receiver 302 is configured to receive a first control message sent by the network side device. The first control message is a message sent by the network side device when the network side device determines that a sum of the first transmit power value and the second transmit power value is a maximum transmit power value of the UE, and the first transmit power value falls outside a preset power range or a ratio of the first transmit power value to the maximum transmit power value falls outside a preset ratio range, where the preset power range is a product of the maximum transmit power value and the preset ratio range.

When the UE moves at a remote end of the network side device, that is, when the UE moves on a cell edge of the network side device, to prevent deterioration of the coverage performance of the UE that is caused because demodulation cannot be correctly performed on the data channel and out-of-synchronization occurs on the control channel, the second transmit power value and the first transmit power value of the UE need to be increased, so as to increase the transmit power of the UE. However, when a sum of the first transmit power and the second transmit power reaches the maximum transmit power value of the UE, the UE cannot increase the first transmit power and the second transmit power anymore, that is, in this case, the transmit power of the UE reaches an upper limit. The receiver 302 of the UE may receive the first control message sent by the network side device.

It should be noted that the network side device may obtain the second transmit power and the first transmit power of the UE, and determine whether the sum of the second transmit power value and the first transmit power value reaches the maximum transmit power value. When determining that the sum of the second transmit power value and the first transmit power value reaches the maximum transmit power value, the network side device may continue to determine whether the second transmit power value and the first transmit power value are within the ratio range. When determining that the second transmit power value and the first transmit power value are within the ratio range, the network side device may send the first control message to the UE.

Optionally, the ratio range in the network side device may be preset, or may be generated by the network side device in advance according to a control policy. This is not specifically limited herein.

It should be noted that when the transmit power of the UE reaches the maximum value, to ensure the coverage performance of the UE, the network side device needs to obtain a range of a ratio of the first transmit power value to the maximum transmit power value of the UE.

The processor 303 is configured to decrease the first transmit power value according to the first control message received by the receiver, so that the decreased first transmit power value falls within the preset power range or a ratio of the decreased first transmit power value to the maximum transmit power value falls within the preset ratio range.

It may be understood that when the transmit power of the UE is maintained to be the maximum value, if the UE decreases the first transmit power value according to the received first control message, the second transmit power value may be increased, so as to improve the coverage performance of the UE.

It should be noted that the processor 303 may enable the decreased first transmit power value to be within a range of the product of the maximum transmit power value and the preset ratio range or enable the ratio of the first transmit power value to the maximum transmit power value to be within the preset ratio range, to avoid that because the decreased transmit power value of the control channel is excessively low, out-of-synchronization occurs on the control channel and consequently the coverage performance of the UE is affected.

It should be noted that in this embodiment of the present invention, the processor 303 of the UE enables the decreased first transmit power value to be within the preset power range or the ratio of the first transmit power value to the maximum transmit power value to be within the preset ratio range, so as to implement adjustment of the first transmit power value and improve the transmit power value of the data channel. In an actual application, a ratio of the decreased first transmit power value to the maximum transmit power value may be within the preset ratio range, the decreased first transmit power value falls within the preset range, a ratio of the increased second transmit power value to the maximum transmit power value falls within the preset ratio range, or the increased second transmit power value falls within the preset power range. This is not specifically limited herein.

Optionally, in the foregoing embodiment, when the UE moves at a local end of the network side device, that is, when the transmit power of the UE does not reach the maximum value, the transmit power value of the control channel of the UE has a constant directly-proportional correspondence with the transmit power value of the data channel. In this case, the UE may receive, by using the receiver 302, a second control message sent by the network side device, and enable the processor 303 to adjust the transmit power value of the control channel according to the second control message and correspondingly adjust the transmit power value of the data channel according to the correspondence.

It may be understood that the network side device may obtain a block error rate (Block Error Rate, BLER) value from a service request message sent by the UE, where the BLER value is used to indicate data transmission quality, and the transmit power value of the data channel may affect the BLER value. Therefore, when the BLER value satisfies normal data transmission, the transmit power value of the data channel may be adjusted by adjusting the BLER value.

It should be noted that the directly-proportional correspondence between the transmit power value of the data channel and the transmit power value of the control channel is preset on the UE. A specific process of implementing adjustment of the transmit power value of the data channel and the transmit power value of the control channel by using the BLER value may be: The network side device generates the second control message according to the BLER value and sends the message to the UE. The UE performs adjustment according to the second control message.

It may be understood that the network side device may compare the obtained BLER value with a preset BLER threshold. When it is determined that the obtained BLER value is greater than the preset threshold, the second control message is generated, where the second control message is used to instruct the UE to increase the transmit power value of the control channel, so as to increase the transmit power value of the UE. When it is determined that the obtained BLER value is less than the preset threshold, the second control message is used to instruct the UE to decrease the transmit power value of the control channel, so as to decrease the transmit power value of the UE. For example, if the BLER value stored in the network side device is 0.3, when the UE sends 100 service data packets to the network side device, the network side device demodulates and analyzes one by one the service data packets sent by the UE, finds that 20 service data packets cannot be demodulated or cannot be demodulated correctly, and obtains that the BLER value is 0.2. If the network side device compares the obtained BLER value with the stored BLER value, and finds that the obtained BLER value is smaller, the network side device generates the second control message, to instruct the UE to decrease the transmit power value of the data channel.

The BLER value is used to indicate data transmission quality. A lower BLER value indicates better data transmission quality, and a higher BLER value indicates poorer data transmission quality. The BLER value in the network side device may be set according to an actual need.

In this embodiment of the present invention, when the UE moves at a remote end of the network side device and the transmit power of the UE is limited, the UE receives, by using the receiver, the first control message sent by the network side device. The processor of the UE may adjust the transmit power value of the control channel and the transmit power value of the data channel according to the first control message, so that the power of the control channel falls within a preset range of the maximum transmit power, and a sum of the transmit power of the control channel and the transmit power of the data channel is equal to the maximum transmit power. Compared with the prior art, a function of the UE does not need to be upgraded, that is, when the function of the UE is limited, the coverage performance of the UE may be ensured, thereby achieving an objective of reducing costs. In addition, when the UE is at a local end of the network side device, the transmit power of the UE is not limited. The UE receives, by using the receiver, the second control message sent by the network side device. The processor of the UE then adjusts the transmit power value of the control channel and the transmit power value of the data channel according to the second control message, to reduce the transmit power value of the UE when ensuring the data transmission quality of the UE.

In the foregoing embodiment, the network side device of the present invention is described. A method embodiment corresponding to the network side device is described below.

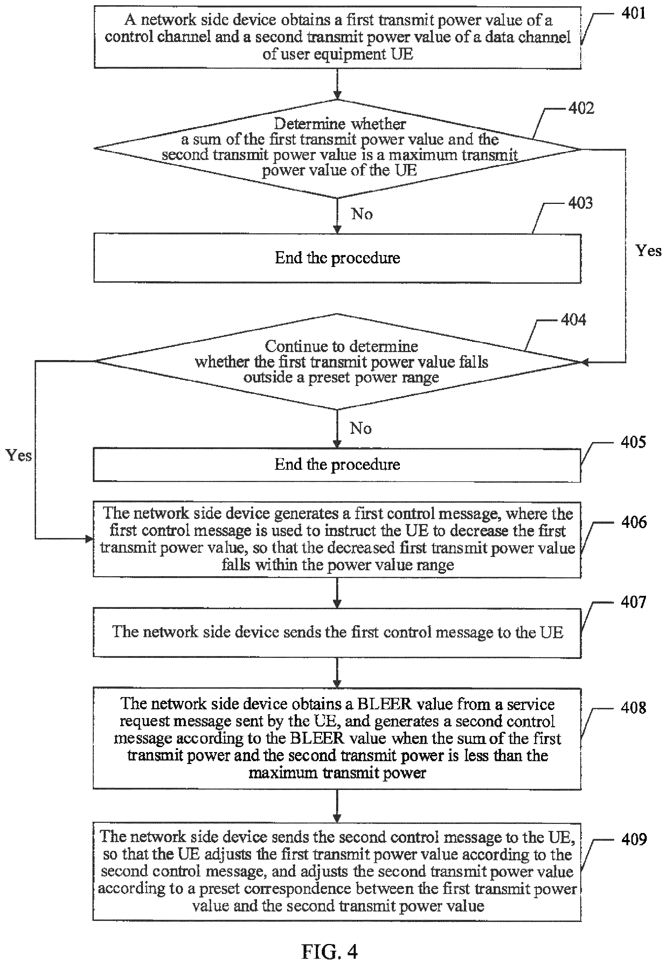

Referring to FIG. 4, a power adjustment method according to an embodiment of the present invention includes the following steps.

401: A network side device obtains a first transmit power value of a control channel and a second transmit power value of a data channel of user equipment UE.

It may be understood that the network side device can periodically or non-periodically obtain transmit powers of the UE from the UE, where the transmit powers of the UE include the transmit power of the control channel and the transmit power of the data channel.

402: Determine whether a sum of the first transmit power value and the second transmit power value is a maximum transmit power value of the UE; and if not, perform step 403; or if yes, perform step 404.

It may be understood that the network side device may calculate the sum of the first transmit power value and the second transmit power, and compares the calculation result with the preset maximum transmit power value of the UE, to determine whether the sum of the first transmit power value and the second transmit power value is the maximum transmit power value of the UE.

403: End the procedure.

404: Continue to determine whether the first transmit power value falls outside a preset power range; and if not, perform step 405; or if yes, perform step 406.

It may be understood that when the calculation result is the maximum transmit power value of the UE, the network side device may continue to perform determining on the first transmit power value by using a preset ratio range.

The network side device may multiply the maximum transmit power value by the preset ratio range to obtain a power value range, and then compare the first transmit power value with the power value range, to determine whether the first transmit power value falls within the power value range; and if the first transmit power value falls within the power value range, perform step 405; or if the first transmit power value falls outside the power value range, perform step 406.

Optionally, the network side device may further determine whether a ratio of the first transmit power value to the maximum transmit power value falls outside the preset ratio range. Specifically, the network side device may calculate the ratio range of the ratio of the first transmit power value to the maximum transmit power value, and then compare the calculated ratio range with the preset ratio range to determine whether the ratio range falls within the preset ratio range.

Optionally, the network side device may further determine whether the first transmit power value falls within the preset range, or determine whether a ratio of the second transmit power value to the maximum transmit power value falls within the preset ratio range. This is not specifically limited herein.

It should be noted that the preset ratio range may be preset on the network side device, or may be generated by the network side device in advance according to a control policy. This is not specifically limited herein.

405: End the procedure.

406: The network side device generates a first control message, where the first control message is used to instruct the UE to decrease the first transmit power value, so that the decreased first transmit power value falls within the power value range.

It should be noted that if the decreased first transmit power value falls within a range of a product of the maximum transmit power value and the preset ratio range, it may be avoided that because a transmit power value of the control channel is excessively low, the control channel is out of synchronization and consequently coverage performance of the UE is affected.

It should be noted that in this embodiment of the present invention, the decreased first transmit power value falls within the preset ratio range of the maximum transmit power value, so as to control adjustment of the first transmit power value, and ensure the coverage performance of the UE. In an actual application, the ratio of the first transmit power value to the maximum transmit power value may be within the preset ratio range, a ratio of the decreased first transmit power value to the maximum transmit power value falls within the preset ratio range, the decreased first transmit power value falls within the preset range, a ratio of the increased second transmit power value to the maximum transmit power value falls within the preset ratio range, or the increased second transmit power value falls within the maximum transmit power value. This is not specifically limited herein.

407: The network side device sends the first control message to the UE.

It may be understood that after generating the first control message, the network side device may send the first control message to the UE.

Optionally, after step 403 in this embodiment, the method further includes step 404 and step 405.

408: The network side device obtains a BLEER value from a service request message sent by the UE, and generates a second control message according to the BLEER value when the sum of the first transmit power and the second transmit power is less than the maximum transmit power.

It may be understood that a processor 101 of the network side device may obtain the block error rate (Block Error Rate, BLER) value from the service request message sent by the UE, where the BLER value is used to indicate data transmission quality, and the transmit power value of the data channel may affect the BLER value, that is, adjustment of the transmit power of the UE may be implemented by using the BLER value.

It should be noted that a directly-proportional correspondence between the first transmit power value and the second transmit power value is preset on the UE. When the network side device determines that the sum of the first transmit power value and the second transmit power value is less than the maximum transmit power value, the network side device may control the transmit power value of the UE by adjusting the first transmit power value. Specifically, the network side device may generate, according to the obtained BLER value, the second control message used to adjust the first transmit power value of the UE.

409: The network side device sends the second control message to the UE, so that the UE adjusts the first transmit power value according to the second control message, and adjusts the second transmit power value according to a preset correspondence between the first transmit power value and the second transmit power value.

In the foregoing embodiment, the network side device determines whether the transmit power value of the control channel falls within the preset ratio range of the maximum transmit power value. In an actual application, before performing determining, the network side device may determine the ratio range. That the network side device determines the ratio range is described below.

It may be understood that when the BLER obtained by the network side device is low, the network side device generates the second control message used to decrease the first transmit power value, and then the UE is enabled to decrease the second transmit power value according to the second control message and the preset directly-proportional relationship, thereby decreasing the transmit power value of the UE. When the BLER obtained by the network side device is high, the network side device generates the second control message used to increase the first transmit power value, and then the UE is enabled to increase the second transmit power value according to the second control message and the preset directly-proportional relationship, thereby increasing the transmit power of the UE.

In addition, in this embodiment of the present invention, when the transmit power of the UE reaches a maximum value, the network side device generates the first control message by using the preset ratio range, so that the UE decreases the transmit power of the control channel to achieve an objective of ensuring the coverage performance of the UE. In an actual application, a function of the UE may be upgraded, so that the UE may obtain, according to a protocol of Release 8 of the Third Generation Partnership Project (3rd Generation Partnership Project, 3GPP), an optimal power ratio that is of the transmit power value of the control channel to the maximum transmit power value and that is provided by the network side device, thereby implementing adjustment of the transmit power value of the data channel and the transmit power value of the control channel, so as to ensure the coverage performance of the UE when the transmit power of the UE is limited.

In this embodiment of the present invention, the network side device receives a notification message sent by the UE. When the network side device determines that the transmit power of the UE is limited, the network side device generates the first control message, and instructs, by using the first control message, the UE to decrease the transmit power value of the control channel, so that the transmit power of the data channel can be increased, so as to ensure the coverage performance of the UE while lowering a requirement on the function of the UE.

Still referring to FIG. 3, another embodiment of a power adjustment method according to an embodiment of the present invention includes the following steps.

501: A network side device obtains a first transmit power value of a control channel and a second transmit power value of a data channel of user equipment UE.

It should be noted that the network side device periodically or non-periodically receives a notification message sent by the user equipment UE by using a transmitter. The notification message carries transmit power values of the UE. The transmit power values of the UE include the transmit power value of the control channel and the transmit power value of the data channel.

Optionally, after step 501 in this embodiment, the method further includes step 502.

502: The network side device determines a ratio range.

It may be understood that when the UE moves at a remote end of the network side device, the transmit power value of the UE increases until the transmit power of the UE reaches an upper limit. The network side device determines that the transmit power value of the UE in this case is a maximum transmit power value, determines a first ratio of a power value, which exists when out-of-synchronization occurs on the control channel, of the control channel to the maximum transmit power value and a difference between the maximum transmit power value and a power value, which exists when demodulation cannot be performed, of the data channel, then determines a second ratio of the difference to the maximum transmit power value, and respectively uses the first ratio and the second ratio as two endpoint values of the ratio range to determine the ratio range. For example, the network side device determines that the maximum transmit power of the UE is 100, the power value, which exists when out-of-synchronization occurs on the control channel, of the control channel is 40, and the power value, which exists when demodulation cannot be performed, of the data channel is 20. That is, when out-of-synchronization occurs on the control channel, the transmit power of the control channel is 60. When demodulation of the data channel is satisfied, the transmit power value of the control channel is 80. As can be known, a range of a ratio of the transmit power value of the control channel to the maximum transmit power value is 60% to 80%.

With a decrease of the transmit power value of the control channel of the UE, it is more probable that out-of-synchronization occurs on the control channel. When the transmit power value of the control channel decreases to a particular value, out-of-synchronization occurs on the control channel. In this case, the network side device records the transmit power value of the control channel as the power value, which exists when out-of-synchronization occurs on the control channel, of the control channel. With a decrease of the transmit power value of the data channel of the UE, it is more probable that the network side device cannot correctly demodulate a packet in a service request message sent by the UE. When the transmit power value of the data channel decreases to a particular value, the network side device cannot demodulate the service request message sent by the UE. In this case, the network side device records the transmit power value of the data channel as the power value, which exists when demodulation cannot be performed, of the data channel.

503: Determine whether a sum of the first transmit power value and the second transmit power value is a maximum transmit power value of the UE; and if not, perform step 504; or if yes, perform step 505.

504: End the procedure.

505: Continue to determine whether the first transmit power value falls outside a preset power range; and if not, perform step 506; or if yes, perform step 507.

506: End the procedure.

507: The network side device generates a first control message, where the first control message is used to instruct the UE to decrease the transmit power of the control channel, and a ratio of the decreased transmit power of the control channel to the maximum transmit power value falls within the preset ratio range.

508: The network side device sends the first control message to the UE.

Optionally, after step 508 in this embodiment, the method further includes step 509 and step 510.

509: The network side device obtains a BLEER value from a service request message sent by the UE, and generates a second control message according to the BLEER value when the sum of the first transmit power and the second transmit power is less than the maximum transmit power.

510: The network side device sends the second control message to the UE, so that the UE adjusts the first transmit power value according to the second control message, and adjusts the second transmit power value according to a preset correspondence between the first transmit power value and the second transmit power value.

For execution methods of step 503 to step 510 in this embodiment, refer to the embodiment corresponding to FIG. 4. Details are not described herein again.

In this embodiment of the present invention, the network side device receives a notification message sent by the UE. When determining that a transmit power of the UE is limited, before determining whether a transmit power value of the control channel falls within a preset ratio range of a maximum transmit power value, the network side device is further configured to determine a ratio range of a ratio of the transmit power value of the control channel to the maximum transmit power value, so that the network side device may generate a first control message according to the ratio range, and instruct, by using the first control message, the UE to adjust the transmit power value of the control channel and a transmit power value of the data channel. Therefore, coverage performance of the UE may be ensured without upgrading a function of the UE, thereby reducing costs. In addition, the network side device determines the ratio range by using a power value, which exists when out-of-synchronization occurs on the control channel, of the control channel and a power value, which exists when demodulation cannot be performed, of the data channel, to ensure an optimal transmit power value of the control channel and an optimal transmit power value of the data channel, so as to improve coverage performance of the UE.

In the foregoing embodiment, the user equipment UE of the present invention is described. A method embodiment corresponding to the UE is described below.

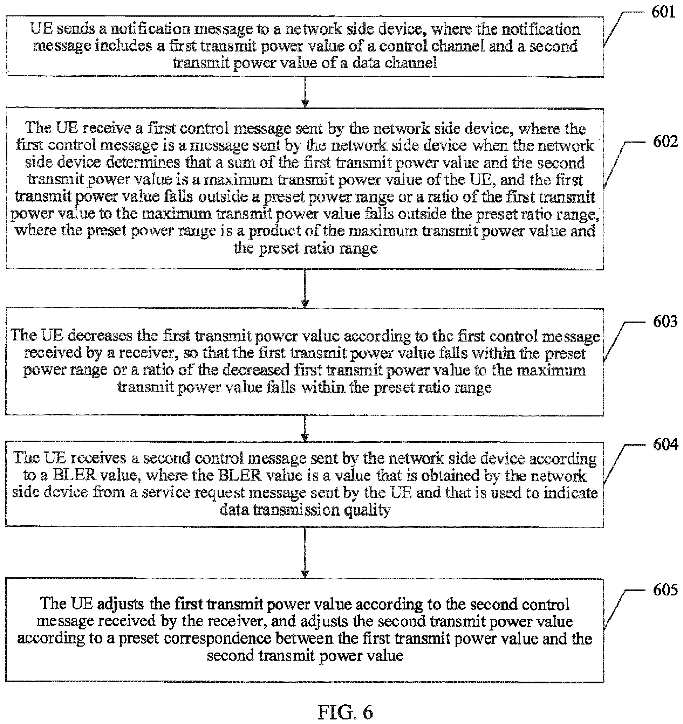

Referring to FIG. 6, an embodiment of a power adjustment method according to an embodiment of the present invention includes the following steps.

601: UE sends a notification message to a network side device, where the notification message includes a first transmit power value of a control channel and a second transmit power value of a data channel.

It may be understood that a transmit power of the user equipment UE affects coverage performance. Therefore, the UE needs to properly control the transmit power. For example, increasing a transmit power of the data channel may improve the coverage performance of the UE, and reducing a transmit power of the control channel may cause out-of-synchronization of the control channel, and reduce the coverage performance of the UE. To control the transmit power of the UE, the notification message may be sent to the network side device by using the UE, so as to periodically or non-periodically report the transmit power values of the UE to the network side device. The transmit power values of the UE include the transmit power value of the control channel and the transmit power value of the data channel.

602: The UE receive a first control message sent by the network side device, where the first control message is a message sent by the network side device when the network side device determines that a sum of the first transmit power value and the second transmit power value is a maximum transmit power value of the UE, and the first transmit power value falls outside a preset power range or a ratio of the first transmit power value to the maximum transmit power value falls outside a preset ratio range, where the preset power range is a product of the maximum transmit power value and the preset ratio range.

When the UE moves at a remote end of the network side device, that is, when the UE moves on a cell edge of the network side device, to prevent deterioration of the coverage performance of the UE that is caused because demodulation cannot be correctly performed on the data channel and out-of-synchronization occurs on the control channel, the second transmit power value and the first transmit power value of the UE need to be increased, so as to increase the transmit power of the UE. However, when a sum of the first transmit power and the second transmit power reaches the maximum transmit power value of the UE, the UE cannot increase the first transmit power and the second transmit power anymore, that is, in this case, the transmit power of the UE reaches an upper limit. The UE may receive the first control message sent by the network side device.

It should be noted that the network side device may obtain the second transmit power and the first transmit power of the UE, and determine whether the sum of the second transmit power value and the first transmit power value reaches the maximum transmit power value. When determining that the sum of the second transmit power value and the first transmit power value reaches the maximum transmit power value, the network side device may continue to determine whether the second transmit power value and the first transmit power value are within the ratio range. When determining that the second transmit power value and the first transmit power value are within the ratio range, the network side device may send the first control message to the UE.

Optionally, the ratio range in the network side device may be preset, or may be generated by the network side device in advance according to a control policy. This is not specifically limited herein.

It should be noted that when the transmit power of the UE reaches the maximum value, to ensure the coverage performance of the UE, the network side device needs to obtain a range of a ratio of the first transmit power value to the maximum transmit power value of the UE.

603: The UE decreases the first transmit power value according to the first control message received by a receiver, so that the first transmit power value falls within the preset power range or a ratio of the decreased first transmit power value to the maximum transmit power value falls within the preset ratio range.

It may be understood that when the transmit power of the UE is maintained to be the maximum value, if the UE decreases the first transmit power value according to the received first control message, the second transmit power value may be increased, so as to improve the coverage performance of the UE.

It should be noted that the UE may enable the decreased first transmit power value to be within a range of the product of the maximum transmit power value and the preset ratio range or enable the ratio of the first transmit power value to the maximum transmit power value to be within the preset ratio range, to avoid that because the decreased transmit power value of the control channel is excessively low, out-of-synchronization occurs on the control channel and consequently the coverage performance of the UE is affected.

It should be noted that in this embodiment of the present invention, the UE enables the decreased first transmit power value to be within the preset power range or the ratio of the first transmit power value to the maximum transmit power value to be within the preset ratio range, so as to implement adjustment of the first transmit power value and improve the transmit power value of the data channel. In an actual application, a ratio of the decreased first transmit power value to the maximum transmit power value may be within the preset ratio range, the decreased first transmit power value falls within the preset range, a ratio of the increased second transmit power value to the maximum transmit power value falls within the preset ratio range, or the increased second transmit power value falls within the maximum transmit power value. This is not specifically limited herein.

Optionally, after step 603 in this embodiment, the method further includes step 604 and step 605.

604: When the network side device determines that the sum of the first transmit power value and the second transmit power value is less than the maximum transmit power value, the UE receives a second control message sent by the network side device according to a BLER value, where the BLER value is a value that is obtained by the network side device from a service request message sent by the UE and that is used to indicate data transmission quality.

It may be understood that the network side device may obtain the block error rate (Block Error Rate, BLER) value from a service request message sent by the UE, where the BLER value is used to indicate data transmission quality, and the transmit power value of the data channel may affect the BLER value. Therefore, when the BLER value satisfies normal data transmission, the transmit power value of the data channel may be adjusted by adjusting the BLER value.

It should be noted that the directly-proportional correspondence between the transmit power value of the data channel and the transmit power value of the control channel is preset on the UE. A specific process of implementing adjustment of the transmit power value of the data channel and the transmit power value of the control channel by using the BLER value may be: The network side device generates the second control message according to the BLER value and sends the message to the UE. The UE performs adjustment according to the second control message.

605: The UE adjusts the first transmit power value according to the second control message received by the receiver, and adjusts the second transmit power value according to a preset correspondence between the first transmit power value and the second transmit power value.

It may be understood that the network side device may compare the obtained BLER value with a preset BLER threshold. When it is determined that the obtained BLER value is greater than the preset threshold, the second control message is generated, where the second control message is used to instruct the UE to increase the transmit power value of the control channel, so as to increase the transmit power value of the UE. When it is determined that the obtained BLER value is less than the preset threshold, the second control message is used to instruct the UE to decrease the transmit power value of the control channel, so as to decrease the transmit power value of the UE. For example, if the BLER value stored in the network side device is 0.3, when the UE sends 100 service data packets to the network side device, the network side device demodulates and analyzes one by one the service data packets sent by the UE, finds that 20 service data packets cannot be demodulated or cannot be demodulated correctly, and obtains that the BLER value is 0.2. If the network side device compares the obtained BLER value with the stored BLER value, and finds that the obtained BLER value is smaller, the network side device generates the second control message, to instruct the UE to decrease the transmit power value of the data channel.

The BLER value is used to indicate data transmission quality. A lower BLER value indicates better data transmission quality, and a higher BLER value indicates poorer data transmission quality. The BLER value in the network side device may be set according to an actual need.

In this embodiment of the present invention, when the UE moves at a remote end of the network side device and the transmit power of the UE is limited, the UE receives the first control message sent by the network side device. The UE may adjust the transmit power value of the control channel and the transmit power value of the data channel according to the first control message, so that the power of the control channel falls within a preset range of the maximum transmit power, and a sum of the transmit power of the control channel and the transmit power of the data channel is equal to the maximum transmit power. Compared with the prior art, a function of the UE does not need to be upgraded, that is, when the function of the UE is limited, the coverage performance of the UE may be ensured, thereby achieving an objective of reducing costs. In addition, when the UE is at a local end of the network side device, the transmit power of the UE is not limited. The UE receives the second control message sent by the network side device. The UE then adjusts the transmit power value of the control channel and the transmit power value of the data channel according to the second control message, to reduce the transmit power value of the UE when ensuring the data transmission quality of the UE.

It may be clearly understood by persons skilled in the art that for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A network side device, comprising:
a processor, configured to: obtain a first transmit power value of a control channel and a second transmit power value of a data channel of a user equipment UE, and when a sum of the first transmit power value and the second transmit power value is a maximum transmit power value of the UE, and the first transmit power value falls outside a preset power range or a ratio of the first transmit power value to the maximum transmit power value falls outside a preset ratio range, generate a first control message, wherein the preset power range is a product of the maximum transmit power value and the preset ratio range, the first control message is used to instruct the UE to decrease the transmit power value of the control channel, and the decreased transmit power value of the control channel falls within the preset power range or a ratio of the decreased transmit power value to the maximum transmit power value falls within the preset ratio range; and
a transmitter, configured to send the first control message to the UE.

2. The network side device according to claim 1, wherein the processor is further configured to:
obtain a block error rate BLEER value from a service request message sent by the UE, and generate a second control message according to the BLEER value when the sum of the first transmit power and the second transmit power is less than the maximum transmit power; and
the transmitter is further configured to send the second control message to the UE, so that the UE adjusts the first transmit power value according to the second control message, and adjusts the second transmit power value according to a preset correspondence between the first transmit power value and the second transmit power value.

3. The network side device according to claim 1, wherein the processor is further configured to determine the ratio range before generating the first control message.

4. The network side device according to claim 3, wherein the processor is configured to:
determine a third transmit power value and a fourth transmit power value of the control channel, determine a first ratio of the third transmit power value to the maximum transmit power value and a second ratio of the fourth transmit power value to the maximum transmit power value, and determine the ratio range according to the first ratio and the second ratio, wherein the third transmit power value is a power value, which exists when out-of-synchronization occurs on the control channel, of the control channel, and the fourth transmit power value is a difference between the maximum transmit power value and a power value, which exists when demodulation cannot be performed, of the data channel.

5. The network side device according to claim 1, wherein the network side device further comprises a receiver, the receiver is configured to receive a notification message sent by the UE, and the notification message comprises the first transmit power value and the second transmit power value; and
the processor is configured to obtain the first transmit power value and the second transmit power value from the receiver.

6. A user equipment UE, comprising:
a receiver, configured to receive a first control message sent by a network side device, wherein the first control message is a message sent by the network side device when the network side device determines that a sum of a first transmit power value of a control channel and a second transmit power value of a data channel is a maximum transmit power value of the UE, and the first transmit power value falls outside a preset power range or a ratio of the first transmit power value to the maximum transmit power value falls outside a preset ratio range, wherein the preset power range is a product of the maximum transmit power value and the preset ratio range; and
a processor, configured to decrease the first transmit power value according to the first control message received by the receiver, so that the decreased first transmit power value falls within the preset power range or a ratio of the decreased first transmit power value to the maximum transmit power value falls within the preset ratio range.

7. The UE according to claim 6, wherein the receiver is further configured to: when the network side device determines that the sum of the first transmit power value and the second transmit power value is less than the maximum transmit power value, receive a second control message sent by the network side device according to a block error rate BLER value, wherein the BLER value is a value that is obtained by the network side device from a service request message sent by the UE and that is used to indicate data transmission quality; and
the processor is further configured to: adjust the first transmit power value according to the second control message received by the receiver, and adjust the second transmit power value according to a preset correspondence between the first transmit power value and the second transmit power value.

8. The UE according to claim 6, further comprising a transmitter, wherein the transmitter configured to send a notification message to the network side device, wherein the notification message comprises the first transmit power value and the second transmit power value.

9. A power adjustment method, comprising:
obtaining, by a network side device, a first transmit power value of a control channel and a second transmit power value of a data channel of a user equipment UE;
when a sum of the first transmit power value and the second transmit power value is a maximum transmit power value of the UE, and the first transmit power value falls outside a preset power range or a ratio of the first transmit power value to the maximum transmit power value falls outside a preset ratio range, generating, by the network side device, a first control message, wherein the preset power range is a product of the maximum transmit power value and the preset ratio range, the first control message is used to instruct the UE to decrease the transmit power of the control channel, and the decreased transmit power value of the control channel falls within the preset power range or a ratio of the decreased transmit power value to the maximum transmit power value falls within the preset ratio range; and
sending, by the network side device, the first control message to the UE.

10. The method according to claim 9, further comprising:
obtaining, by the network side device, a block error rate BLEER value from a service request message sent by the UE, and generating a second control message according to the BLEER value when the sum of the first transmit power and the second transmit power is less than the maximum transmit power; and
sending, by the network side device, the second control message to the UE, so that the UE adjusts the first transmit power value according to the second control message, and adjusts the second transmit power value according to a preset correspondence between the first transmit power value and the second transmit power value.

11. The method according to claim 9, before the generating the first control message, further comprising: determining, by the network side device, the ratio range.

12. The method according to claim 11, wherein the determining, by the network side device, the ratio range comprises:
determining, by the network side device, a third transmit power value and a fourth transmit power value of the control channel, wherein the third transmit power value is a power value, which exists when out-of-synchronization occurs on the control channel, of the control channel, and the fourth transmit power value is a difference between the maximum transmit power value and a power value, which exists when demodulation cannot be performed, of the data channel;
determining, by the network side device, a first ratio of the third transmit power value to the maximum transmit power value and a second ratio of the fourth transmit power value to the maximum transmit power value; and
determining, by the network side device, the ratio range according to the first ratio and the second ratio.

13. The method according to claim 9, before the obtaining, by the network side device, the first transmit power value of the control channel and the second transmit power value of the data channel of user equipment UE, further comprising:
receiving, by the network side device, a notification message sent by the UE, wherein the notification message comprises the first transmit power value and the second transmit power value; and
obtaining, by the network side device, the first transmit power value and the second transmit power value from the notification message.

14. A power adjustment method, comprising:
receiving, by a UE, a first control message sent by a network side device, wherein the first control message is a message sent by the network side device when the network side device determines that a sum of a first transmit power value of a control channel and a second transmit power value of a data channel is a maximum transmit power value of the UE, and the first transmit power value falls outside a preset power range or a ratio of the first transmit power value to the maximum transmit power value falls outside a preset ratio range, wherein the preset power range is a product of the maximum transmit power value and the preset ratio range; and
decreasing, by the UE, the first transmit power value according to the first control message received by the receiver, so that the decreased first transmit power value falls within the preset power range or a ratio of the decreased first transmit power value to the maximum transmit power value falls within the preset ratio range.

15. The method according to claim 14, further comprising:
when the network side device determines that the sum of the first transmit power value and the second transmit power value is less than the maximum transmit power value, receiving, by the UE, a second control message sent by the network side device according to a block error rate BLER value, wherein the BLER value is a value that is obtained by the network side device from a service request message sent by the UE and that is used to indicate data transmission quality; and
adjusting, by the UE, the first transmit power value according to the second control message received by the receiver, and adjusting the second transmit power value according to a preset correspondence between the first transmit power value and the second transmit power value.

16. The method according to claim 14, before the network side device determines that the sum of the first transmit power value and the second transmit power value is less than the maximum transmit power value, further comprising:
sending, by the UE, a notification message to the network side device, wherein the notification message comprises the first transmit power value and the second transmit power value.
